# EUROPÄISCHE PATENTSCHRIFT

(11) **EP 2 168 197 B1**
(45) Veröffentlichungstag und Bekanntmachung des Hinweises auf die Patenterteilung: **04.09.2013**
(21) Anmeldenummer: 08774679.8
(22) Anmeldetag: 03.07.2008
(51) Int. Cl.: H01M 8/10, H01M 4/86

(54) **MEMBRAN-ELEKTRODEN-EINHEIT**
MEMBRANE ELECTRODE ASSEMBLY
ENSEMBLE D'ÉLECTRODES À MEMBRANES

(30) Priorität: 06.07.2007 DE 102007031526
(43) Veröffentlichungstag der Anmeldung: 31.03.2010
(73) Patentinhaber: Fraunhofer-Gesellschaft zur Förderung der angewandten Forschung e.V., 80686 München (DE)
(72) Erfinder: CREMERS, Carsten, 76327 Pfinztal (DE); KRAUSA, Michael, 76137 Karlsruhe (DE)
(74) Vertreter: Lux, Berthold
(86) Internationale Anmeldenummer: PCT/EP2008/058551
(87) Internationale Veröffentlichungsnummer: WO 2009/007294

(56) Entgegenhaltungen:
- EP-A- 1 408 569
- EP-A- 1 686 640
- US-A1- 2004 197 627
- US-B1- 7 049 014

## Beschreibung

Die vorliegende Erfindung betrifft eine Elektrode die für den Einsatz in einer Direkt Ethanol Brennstoffzelle (DEFC) geeignet ist, sowie eine Membran-Elektroden-Einheit (MEA) und eine Brennstoffzelle in denen die erfindungsgemäße Elektrode eingesetzt wird.

Der Anwendungsbereich von Brennstoffzellen ist vielseitig. Ein Einsatzbereich sind tragbare Elektrogeräte wie Computer. In solchen Geräten ist der Einsatz von Niedertemperaturbrennstoffzellen erwünscht. Des Weiteren ist generell bevorzugt, dass Brennstoffzellen mittels Alkoholen betrieben werden. Viel versprechende Versuche konnten bis Heute mit Direkt Methanol Brennstoffzellen (DMFC) durchgeführt werden. Allerdings gelang es nicht auch Brennstoffzellen mit Ethanol oder längerkettigen Alkoholen zu betreiben. Eine Problematik diesbezüglich besteht darin, dass Ethanol oder andere längerkettige Alkohole bei relativ niedrigen Temperaturen nur schwer zu CO₂ oxidiert werden. Insbesondere tritt bei der Oxidation von Ethanol das giftige Acetaldeyd auf, welches - um einen kommerziellen Einsatz von Direkt Ethanol Brennstoffzellen (DEFC) zu ermöglichen - unbedingt weiteroxidiert werden muss.

Bei der Entwicklung von geeigneten Katalysatorsystemen für die Oxidation von Alkoholen wurden insbesondere Platin-Zinn Legierungen verwendet. Andere viel versprechende Legierungen bestehen aus Platin und einem Element der Gruppe der Lantaniden, insbesondere Cer, Lanthan oder Praseodym. Darüber hinaus wurden auch Legierungen basierend auf ternären Systemen eingesetzt. Allerdings konnte bis dato kein Katalysatorsystem entwickelt werden welches Ethanol oder längerkettige Alkohole zufriedenstellend umsetzt.

Demnach ist es Aufgabe der vorliegenden Erfindung eine Elektrode für den Einsatz in einer Brennstoffzelle die mittels Ethanol oder längerkettigen Alkoholen betrieben werden soll, insbesondere einer Direkt Ethanol Brennstoffzelle (DEFC), bereitzustellen. Des Weiteren ist es Aufgabe der vorliegenden Erfindung eine Membran-Elektroden-Einheit (MEA) für die oben bezeichnete Brennstoffzelle zu entwickeln.

Die Erkenntnis der vorliegenden Erfindung liegt darin, dass intermediäre Oxidationsprodukte von Ethanol und/oder längerkettigen Alkoholen, wie Aldehyde, z.B. Acetaldyd, in einen zweiten Schritt weiter aufoxidiert werden müssen. Eine weitere Erkenntnis der vorliegenden Erfindung ist es, dass die Oxidation von Ethanol und/oder längerkettigen Alkoholen durch ein Gemisch aus zwei verschiedenen katalytisch aktiven Metallen, die nicht miteinander legiert sind, zu erreichen ist.

Demnach richtet sich die vorliegende Erfindung auf eine Elektrode gemäß Anspruch 1, welche mindestens zwei nicht miteinander legierte katalytisch aktive Komponenten (A) und (B) an und/oder in der Elektrode umfasst, worin
(a) mindestens ein(e) erste(s) katalytisch aktive(s) Metall und/oder Legierung als Komponente (A) Ethanol und/oder zumindest einen C3 bis C10-haltigen Alkohol oxidiert und
(b) mindestens ein(e) zweite(s) katalytisch aktive(s) Metall und/oder Legierung als Komponente (B) Acetaldehyd (CH₃CHO) und/oder zumindest einen C3 bis C10-haltigen Aldehyd und/oder Essigsäue und/oder zumindest eine C2 bis C9-haltige Karbonsäure oxidiert.

Vorzugsweise oxidiert das(die) zweit(e) katalytisch aktive(s) Metall und/oder Legierung Acetaldehyd (CH₃CHO) und/oder zumindest einen C3 bis C10-haltigen Aldehyd.

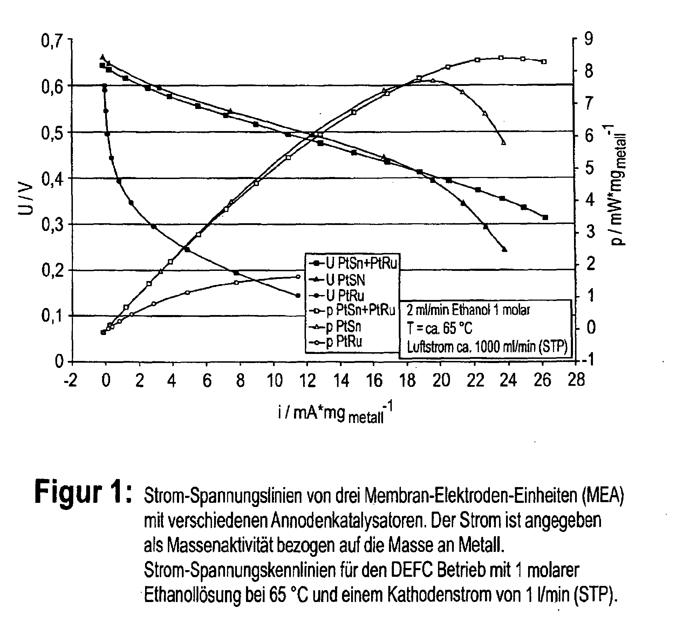

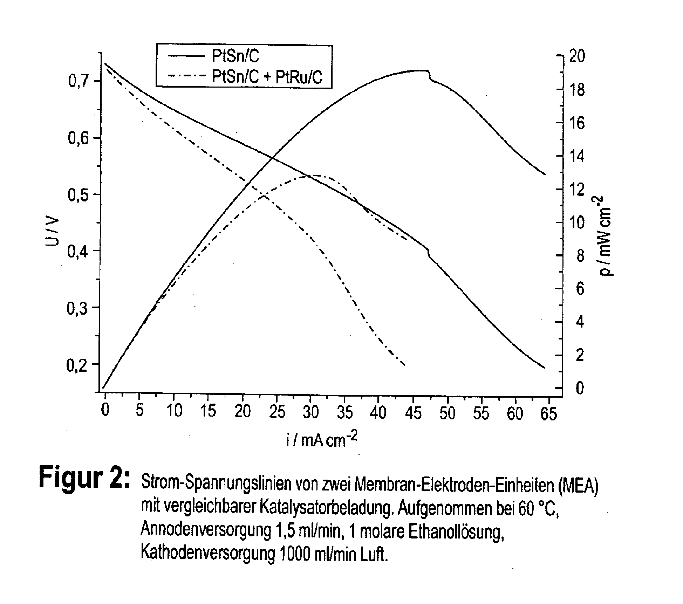

Es hat sich überraschenderweise gezeigt, dass eine solche Elektrode es ermöglicht Ethanol oder längerkettige Alkohole in ausreichender form zu oxidieren und so Membran-Elektroden-Einheiten (MEA) bereitzustellen, die deutlich höhere Leistungsdichten aufweisen als bisher bekannte mit Ethanol betriebene Membran-Elektroden-Einheiten (MEA) (siehe Figur 1 und 2).

Eine Elektrode nach vorliegender Erfindung ist ein elektrisch leitendes Teil in einem elektrischen oder elektronischen Bauteil oder Bauelement, insbesondere in einer Membran-Elektroden-Einheit (MEA), an welchem eine elektrochemische Reaktion abläuft und welches die im Rahmen dieser elektrochemischen Reaktion freiwerdenden Ladungsträger, an die im Kontakt befindlichen Elektronen- und Ionenleiter, insbesondere die Elektrolytmembran einer MEA, ableitet.

Eine zwingende Voraussetzung der Elektrode ist, dass sie zumindest zwei nicht miteinander legierte katalytisch aktive Komponenten (A) und (B) umfasst.

Der Begriff Legierung wird wie allgemein üblich verstanden. Demnach ist eine Legierung ein metallisches Gemisch aus mindestens zwei Komponenten, von denen wenigstens eine ein Metall ist. Folglich verlang die vorliegende Erfindung, dass die Elektrode, vorzugsweise Annode, zwei Komponenten (A) und (B) umfasst, die nicht in einem metallischen Gemisch - im Sinne einer Legierung - vorliegen. Auf der anderen Seite können die einzelnen Komponenten (A) und (B) selbst Metalle oder Legierungen darstellen.

Darüber hinaus müssen die Komponenten (A) und (B) katalytisch aktiv sein, insbesondere muss Komponente (A) die Oxidation von Ethanol und/oder längerkettigen Alkoholen bei niedrigen Temperaturen, d.h. unter 90 °C, vor allem unter 80 °C und insbesondere unter 70 °C ermöglichen. Komponente (B) muss im selben Temperaturbereich die Oxidation von Acetaldehyd und/oder längerkettiger Aldehyde und/oder Essigsäure und/oder längerkettiger Karbonsäuren ermöglichen. Vorzugsweise ermöglicht Komponente (B) die Oxidation von Acetaldehyd und/oder längerkettiger Aldehyde, insbesondere von Acetaledehyd. Es ist jedoch nicht erforderlich, wie überraschender weise gezeigt wurde, dass die Komponente (B) für die Oxidation des Ethanols und/oder des längerkettigen Alkols selber aktiv ist.

Im Folgenden seien die beiden zwingenden Komponenten (A) und (B) genauer beschrieben.

Komponente (A) ist ein(e) erste(s) katalytisch aktive(s) Metall und/oder Legierung die Ethanol und/oder zumindest einen C3 bis C10-haltigen Alkohol oxidiert. Bei den C3 bis C10-haltigen Alkohol handelt es sich vorzugsweise um n-Butanol, isoPropanol, Pentanol, wie n-Pentanol, oder Hexanol, wie n-Hexanol. Die Komponente (A) kann vorzugsweise Gemische aus Ethanol und C3 bis C10-haltigen Alkoholen aufoxidieren. Bei den Gemischen kann es sich um Gemische aus zwei, drei oder vier, vorzugsweise zwei, Alkoholen wie in der vorliegenden Erfindung definiert, insbesondere ein Gemisch aus Ethanol und Butanol, handeln. Im Fall, dass kein Gemisch vorliegt kann Komponente (A) vorzugsweise Ethanol oxidieren. Dabei ist bevorzugt, dass die Alkohole zumindest zu Aldehyden oxidiert werden. Insbesondere ist bevorzugt, dass die Komponente (A) Ethanol zu Acetaldehyd oxidiert. Denkbar ist auch, dass die Komponente (A) den Alkohol zu Säuren oxidiert, wie Essigsäure. Demnach kann Komponente (A) insbesondere der Ethanol zu Acetaldehyd und Essigsäure oxidieren.

Folglich handelt es sich bei der Komponente (A) vorzugsweise um ein(e) erste(s) katalytisch aktive(s) Metall und/oder Legierung welche(s) ein Element der Gruppe 10 oder 9 des Periodensystems, bevorzugt Platin (Pt) oder Rhodium (Rh), insbesondere Platin (Pt), umfasst. Es ist insbesondere bevorzugt, dass die Komponente (A) eine Legierung ist. Im Fall, dass es sich bei der Komponente (A) um eine Legierung handelt, ist es bevorzugt, dass die Legierung ein weiteres Element der Gruppe 14 des Periodensystems, bevorzugt Zinn (Sn), umfasst. Demnach handelt es sich bei der Komponente (A) in einer besonderen Ausführungsform um eine Legierung mit zwei Komponenten. Ein besonderer Vertreter der Komponente (A) ist PtSn.

Um besonderes gute Resultate zu erzielen, ist es bevorzugt, dass die Komponente (A) geträgert ist (z.B. auf Kohlenstoff). Demnach ist eine besonders geeignete Komponente (A) der Katalysator PtSn/C.

Eine weitere Voraussetzung der vorliegenden Erfindung ist, dass die Elektrode eine weitere nicht mit der Komponente (A) legierte katalytisch aktive Komponente (B) umfasst. Diese Komponente (B) muss in der Lage sein, die Oxidationsprodukte, insbesondere Oxidationsprodukte bewirkt durch die Komponente (A), weiter abzubauen bzw. zu oxidieren. Folglich handelt es sich bei Komponente (A) und (B) um unterschiedliche Katalysatoren, insbesondere unterscheiden sich die beiden Komponenten (A) und (B) im katalytisch aktiven Metall bzw. in der katalytisch aktiven Legierung.

Demnach ist Komponente (B) ein(e) zweite(s) katalytisch aktive(s) Metall und/oder Legierung, welche(s) Acetaldehyd (CF₃CHO) und/oder zumindest einen C3 bis C10-haltigen Aldehyd oxidiert. Bei den C3 bis C10-haltigen Aldehyd handelt es sich vorzugsweise um n-Butanal, Pentanal, wie n-Pentanal, oder Hexanal, wie n-Hexanal. Die Komponente (B) kann vorzugsweise Gemische aus Acetaldehyd (CH₃CHO) und C3 bis C10-haltigen Aldehyden aufoxidieren. Bei den Gemischen kann es sich um Gemische aus zwei, drei oder vier, vorzugsweise zwei, Aldehyden wie in der vorliegenden Erfindung definiert, insbesondere ein Gemisch aus Acetaldehyd (CH₃CHO) und Butanal, handeln. Im Fall, dass kein Gemisch vorliegt kann Komponente (B) vorzugsweise Acetaldehyd (CF₃CHO) oxidieren. Dabei ist insbesondere bevorzugt, dass die Aldehyde zu CO₂ umgesetzt werden, wie zum Beispiel (B) Acetaldehyd (CH₃CHO) zu CO₂ oxidiert.

Um gute Umsatzraten zu erhalten ist erwünscht, dass ein großer Anteil an Acetaldehyd (CH₃CHO) und/oder C3 bis C10-haltigen Aldehyde oxidiert werden. Demnach ist bevorzugt, dass Komponente (B) mindestens 50 Gew.-%, noch mehr bevorzugt mindestens 70 Gew.-%, insbesondere mindestens 90 Gew.-%, wie mindestens 99 Gew.-%, Aldehyd oxidiert.

Folglich handelt es sich bei der Komponente (B) vorzugsweise um ein(e) zweite(s) katalytisch aktive(s) Metall und/oder Legierung welche(s) ein Element der Gruppe 10 oder 9 des Periodensystems, bevorzugt Platin (Pt), umfasst. Es ist insbesondere bevorzugt, dass die Komponente (B) eine Legierung ist. Im Fall, dass es sich bei der Komponente (B) um eine Legierung handelt, ist es bevorzugt, dass die Legierung ein weiteres Element der Gruppe 8 des Periodensystem, bevorzugt Ruthenium (Ru) oder Rhodium (Rh), insbesondere Ruthenium (Ru), umfasst. Demnach handelt es sich bei der Komponente (B) in einer besonderen Ausführungsform um eine Legierung mit zwei Komponenten. Ein besondere Vertreter der Komponente (B) ist PtRu.

Um besonderes gute Resultate zu erzielen, ist es bevorzugt, dass die Komponente (B) geträgert ist (z.B. auf Kohlenstoff). Demnach ist eine besonders geeignete Komponente (B) der Katalysator PtRu/C.

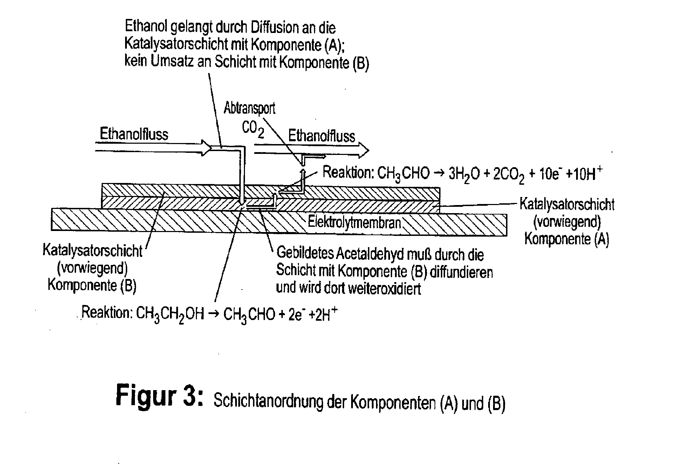

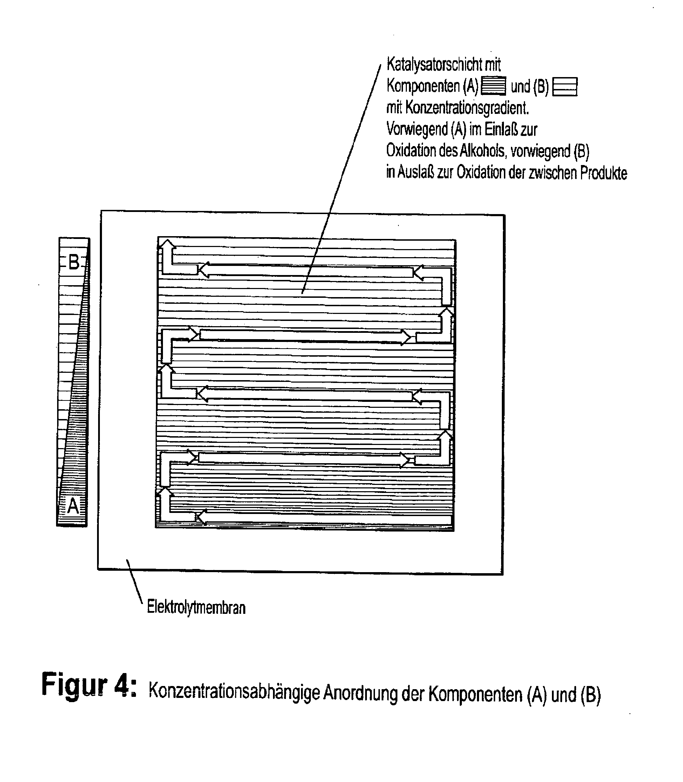

Wie oben schon ausgeführt ist zwingende Voraussetzung in der vorliegenden Erfindung, dass die Komponenten (A) und (B) zusammen keine Legierung ergeben, d.h. sie bilden keine metallischen Gemische sondern definierte getrennte (chemische) Einheiten. Dabei können die Komponenten homogen auf und/oder in der Elektrode verteilt sein. In einer anderen Ausführungsform sind die Komponenten, insbesondere die Komponenten (A) und (B), so angeordnet, dass die Reaktanden, d.h. die Alkohole, insbesondere Ethanol, stufenweise umgesetzt werden können. Die erfindungsgemäße Elektrode soll insbesondere geeignet für Membran-Elektroden-Einheiten (MEA) in Brennstoffzellen sein. Folglich ist ein stufenweiser Umsatz der Alkohole, insbesondere Ethanol, dann gegeben wenn die Komponenten (A) und (B) schichtweise auf der Elektrode aufgetragen sind, oder wenn die Komponenten (A) und (B) auf der Elektrodenmembran in unterschiedlichen Konzentrationen vorliegen. Demnach ist eine bevorzugte Ausführungsform eine Dreischicht-Konstruktion, in der die Komponente (A) die Mittelschicht darstellt und die Elektrodenmembran eine Seite der Mittelschicht abdeckt, wohingegen die Komponente (B) die andere Seite der Mittelschicht zumindest teilweise, bevorzugt ganz, abdeckt (vgl. Figur 3). In einer alternativen Ausführungsform sind die Komponenten (A) und (B) in unterschiedlichen Konzentrationen auf der Elektrolytmembran aufgebracht (vgl. Figur 4). Dabei ist die Konzentration an Komponente (A) am Einlass (d.h. hohe Alkoholkonzentration) relative hoch und die an Komponente (B) relative gering. Zum Auslass hin dreht sich das Verhältnis genau um, d.h. die Konzentration an Komponente (B) ist relative hoch und die an Komponente (A) relative gering.

Die Elektrode kann noch weitere katalytisch aktive Komponenten umfassen, die gegebenenfalls andere Oxidationsprodukte aus den Edukten liefert und/oder andere Oxidationsprodukte weiter umsetzt. So ist insbesondere denkbar, dass die Elektrode noch katalytisch aktive Komponenten umfasst die eine weitere Umsetzung von Essigsäure zu CO₂ ermöglichen.

Um besonderes gute Ergebnisse zu erzielen sollte das Verhältnis an katalytisch aktiven Metallen der Komponenten (A) und (B) in etwa gleich sein. Demnach ist bevorzugt, dass das Gewichtsverhältnis an Metallanteil zwischen der ersten Komponente (A) und der zweiten Komponente (B) 3 : 1 bis 1 : 3, vorzugsweise 2 : 1 bis 1 : 2, insbesondere 1,5 : 1 bis 1 : 1,5, wie 1 : 1, beträgt.

Darüber hinaus ist es bevorzugt, dass die Elektrode neben den Komponenten (A) und (B) ein Ionomer umfasst. Ionomere sind thermoplastische Kunststoffe. Ionomere werden durch Copolymerisation eines unpolaren mit einem polaren Monomer gewonnen. Die polaren Bildungen drängen die Kristallisation zurück und führen zu einer "ionischen Vernetzung".

Gegenüber herkömmlichen Thermoplasten haben Ionomere den Vorteil, dass in ihnen sowohl Nebenvalenzkräfte als auch Ionenbindungen wirksam werden. Diese Ionenbindungen sind besonders fest und verleihen dem Stoff seine charakteristischen Eigenschaften. Darüber hinaus können Ionoplasten im Gegensatz zu den meisten anderen Kunststoffen als Elektrolyte dienen.

Ein Vertreter dieser Klasse ist Nafion, ein sulfoniertes Tetrafluorethylen-Polymer (PTFE), mit einer Dichte von etwa 2100 kg/m³ und einer elektrischen Leitfähigkeit von etwa 0,5·10⁻³ - 2,31·10⁻³ (mm · Ohm)⁻¹. Ein anderer Vertreter dieser Klasse ist sulfoniertes Polyetheretherketon (sPEEK).

Vorzugsweise umfasst die Elektrode mindestens 20 Gew.-%, noch mehr bevorzugt mindestens 30 Gew.-%, an Ionomer. In einer besonderen Ausführungsform beträgt der Anteil an Ionomer in der Elektrode im Bereich von 30 bis 50 Gew.-%.

Denkbar ist auch, dass für die Herstellung der erfindungsgemäßen Elektrode ein Porenbildner, wie Diamoniumcarbonat (NH₄)₂CO₃ oder Amoniumbicarbonat NH₄HCO₃, verwendet wird.

Die erfindungsgemäße Elektrode wird als Anode bevorzugt als Anodenelektrode einer Membran-Elektroden-Einheit (engl. Membrane Electrode Assembly, MEA) insbesondere in Brennstoffzellen eingesetzt.

Folglich richtet sich die vorliegende Erfindung auch auf eine Membran-Elektroden-Einheit oder eine Brennstoffzelle umfassend eine Elektrode nach der vorliegenden Erfindung.

Vorzugsweise ist die Annode der Membran-Elektroden-Einheit (MEA) die Elektrode wie in der vorliegenden Erfindung beschrieben. Darüber hinaus ist es vorteilhaft wenn die Membran-Elektroden-Einheit (MEA) als Membran eine Protonenaustauschermembran umfasst, insbesondere ein Ionomer wie oben beschrieben. Vorzugsweise wird die erfindungsgemäße Elektrode auf die Protonenaustauschermembran heißgepresst. Alternativ kann die Elektrodenstruktur auch durch Heißsprühen, Rakeln oder Siebdruck aufgebracht werden. Als Kathode können die herkömmlichen Kathoden aus dem Stand der Technik eingesetzt werden, die z.B. Platin oder Platin Legierungen z.B. mit Kobalt einsetzen.

Schließlich richtet sich die vorliegende Erfindung auch auf eine Brennstoffzelle umfassend eine Elektrode nach der vorliegenden Erfindung, die als Annode in der Brennstoffzelle dient. Vorzugsweise weißt eine solche Brennstoffzelle eine wie oben beschriebe Membran-Elektroden-Einheit (MEA) auf. In einer besonderen Ausführungsform handelt es sich bei der Brennstoffzelle um eine Direkt-Ethanol Brennstoffzelle, d.h. die Brennstoffzelle umfasst einen Annodenraum der mit Ethanol gefüllt ist.

Die vorliegende Erfindung umfasst auch die Herstellung der erfindungsgemäßen Elektrode. Dabei werden die Komponente (A) und die Komponente (B) für einige der möglichen Ausführungsformen der Erfindung vermischt. Bei dem Mischen muss darauf geachtet werden, dass zu hohen Drücke, wie etwa bei Mischen mittels Mörser, Kugelmühle oder einer anderen mechanischen Mahleinrichtung entstehen können, vermieden werden, um jegliche Bildung von unerwünschten Legierungen zwischen Komponente (A) und Komponente (B) zu vermeiden. Anschließend wird vorzugsweise die so hergestellte Mischung mit Wasser und Ionomerdispersion versetzt und vermengt. Die so erhaltene Tinte wird auf ein Substrat aufgebracht, z.B. durch Sprühen. Soll eine Membran-Elektroden-Einheit (MEA) hergestellt werden handelt es sich bei dem Substrat vorzugsweise um eine Protonenaustauschmembran wie oben beschrieben. Alternativ kann das Substrat auch ein Gasdiffusionsmedium z.B. Kohlestoffpapiere oder Kohlenstofffilze wie sie von Toray oder SGL Carbon (Handelsname Sigracet) vertrieben werden sein. Diese wird dann in einem weiteren Schritt auf die Protonenaustauschmembran mittels Heißpressen aufgebracht.

Für die Herstellung einer Membran-Elektroden-Einheit (MEA) mit Gradientenanordung wie oben beschrieben wird
(a) das(die) erste katalytisch aktive Metall und/oder Legierung (A) und das(die) zweite katalytisch aktive Metall und/oder Legierung (B) in mehreren Mischungen mit unterschiedlichen Verhältnis gemischt, dann
(b) die einzelnen Mischungen jeweils mit Wasser und Ionomerdispersion versetz und vermengt werden
(c) die einzelnen Mischungen streifenförmig auf ein Substrat gerakelt werden, so dass die Abfolge der Streifen einen linearen Gradienten im Verhältnis der Komponente A zur Komponente B bildet.

Genauer umfasst die Herstellung einer MEA mit Gradientenanordung folgende Schritte:
Schritt a) Es werden insgesamt mehrere Tinten, bevorzugt fünf Tinten, angesetzt die die Komponenten A und B in unterschiedlichen Verhältnissen, insbesondere in den Verhältnissen 3:1, 2:1, 1:1 1:2 und 1:3, enthalten. Die Komponenten A und B werden hierfür jeweils im entsprechenden Gewichtsverhältnis eingewogen und jeweils mit der fünfachen Menge an Wasser und mit Ionomerdispersion, wie Nafion-Lösung, versetzt. Die Menge an Ionomerdispersion, wie Nafion-Lösung, wird dabei wiederum jeweils so gewählt, dass der spätere Ionomeranteil, wie z.B. Nafion-Anteil, am Feststoff vorzugsweise 40 Gew.-% beträgt. Den Tinten wird ca. 10 Minuten vor der Verarbeitung vorzugsweise Diammoniumcarbonat zugesetzt, so dass dessen Anteil am Feststoff vorzugsweise 10 Gew.-% beträgt.
Schritt b) An den Rand eines geeigneten Substrats z.B. eines Kohlenstofffilzes vom Typ Sigracet 35AC wird ein Streifen von jeder Tinte über vorzugsweise ein fünftel der Randlänge aufgetragen in der Reihen folge Verhältnis A:B = 3:1, 2:1, 1:1, 1:2, 1:3. Anschließend wird die Tinte mittels eines Rakels von der Aufbringungskante weg über das Substrat gleichmäßig verteilt. Die so erhaltene erste Elektrodenschicht wird im Ofen bei vorzugsweise 130 °C an Luft getrocknet, so dass sich eine poröse, fest haftende Struktur bildet.
Schritt c) Schritt b wird so oft wiederholt, bis die gewünschte Metallbeladung erreicht ist. Dabei werden immer Streifen mit derselben Katalysatorzusammensetzung übereinander angeordnet.
Schritt d) Die Elektrode wird durch Heißpressen mit einer Membran, wie Nafionmembran und einer Kathodenelektrode zu einer MEA verbunden.
Schritt e) Die fertige MEA wird vorzugsweise in eine DEFC oder einen DEFC Stapel eingebaut, wobei der Streifen mit der höchsten Konzentration an Komponente A zum Brennstoffeinlass der Streifen mit der höchsten Konzentration an Komponente B zum Brennstoffauslass hin orientiert wird (s. Abbildung 4)

Im Folgenden wird die Erfindung mittels Beispiele genauer erläutert.

### BEISPIELE

1) Herstellung einer Membran-Elektroden-Einheit (MEA) mit Hilfe des Heißsprühverfahrens:
   Für die Annode werden PtSn/C (Komponente (A)) (z.B. E-Tek C14-40/Sn HP 40% PtSn Alloy (3:1 a/o) on Vulcan XC72) und PtRu/C (Komponente (B)) (z.B. Johnson & Matthey HiSPEC 10000 40% Platinum 20% Ruthenium on carbon black) Katalysatoren verwendet. Die beiden Katalysatoren werden im Gewichtsverhältnis 2:1 bezogen auf den Metallanteil gemischt und mit etwa 10-fachen Massen an Wasser und mit der Ionomerendispersion Nafion-Lösung versetzt und innig vermengt, wobei die Menge an Ionomerendispersion so gewählt ist, dass die Elektrode 40 Gew.-% an Ionomer enthält bezogen auf den Feststoffanteil. Die so erhaltene Tinte wird auf ein Gasdiffusionsmedium gesprüht, welches auf 120 - 140 °C erwärmt ist, so dass das Wasser rasch verdampft und das Ionomer fest an die Katalysatorpartikel und das Substrat bindet. Anschließend wird bei 130 °C im Ofen an Luft für 1 h getempert. Die so erhaltene Elektrode wird anschließend auf die Protonenaustauschermembran heißgepresst Alternativ kann die Tinte auch direkt auf die Ionentauschermembran als Substrat gesprüht werden.
   Die so erhaltene Membran-Elektroden-Einheit (MEA) wird in eine DEFC-Zelle eingesetzt und liefert deutlich höhere Leistungsdichten als eine Membran-Elektroden-Einheit (MEA) mit vergleichbarer Metallbeladung bei ausschließlicher Nutzung von Pt/Sn oder PtRu Katalysatoren (siehe Figur 1 und 2).
2) Herstellung einer MEA aus Gasdiffusionelektroden mittels Rakel oder Pinseln und anschließendem Heißpressen:
   Die Katalysatorkomponenten werden im Verhältnis 2:1 gemischt und mit der etwa fünffachen Masse an Wasser versetzt. Anschließend wird Nafiondispersion zugefügt, so dass der Nafionanteil am Feststoff 40-Gew.-% beträgt. Die Tinte wird anschließend innig vermischt. Etwa 10 Minuten vor der Verarbeitung wird der Tinte Diammoniumcarbonat als Pulver zugesetzt. Die Menge an Diammonumcarbonat wird so gewählt, dass sie etwa 10% des Feststoffanteils entspricht. Die Tinte wird anschließend schichtweise auf ein Gasdiffusionsmedium als Substrat mit Hilfe eines Pinsels oder Rakels aufgebracht. Nach jeder Schicht wird die Elektrode im Ofen bei 130 °C für 1h getempert. Dabei verdampfen die Lösungsmittel und das Ammoniumcarbont, welches als Porenbildner zugesetzt wurde zersetz sich rasch in Ammoniak, Kohlendioxid und Wasserdampf. Dabei entsteht eine poröse, durch das Ionomer aber fest haftende Schicht. Nach Fertigstellung der Elektrode wird diese mit der Elektrolytmembran heißverpresst wie im Beispiel 1 beschrieben.
3) MEA mit Schichtaufbau der Elektrode durch Heißsprühen
   Die beiden Katalysatorkomponenten werden getrennt im Gewichtsverhältnis 2:1 eingewogen und getrennt mit jeweils der zehnfachen Masse an Wasser und Nafion-Lösung versetzt und dispergiert. Die Menge an Nafion-Lösung wird dabei wiederum so gewählt, dass der spätere Anteil von Nafion am Feststoff jeweils 40-Gew-% beträgt. Anschließend wird zunächst die Tinte welche Komponente A enthält auf eine auf 120 - 140 °C erwärmte Ionomermembran gesprüht. Anschließend wird die Tinte welche Komponente B enthält bei gleichfalls 120 - 140 °C auf die Schicht aus Komponente A gesprüht. Die MEA wird im Anschluss 1h bei 130 °C im Ofen in Luft getempert.
4) MEA mit Gradientenanordung der Komponenten durch Rakeln und Heißpressen
   Schritt a) Es werden insgesamt fünf Tinten angesetzt die die Komponenten A und B in den Verhältnissen 3:1, 2:1, 1:1 1:2 und 1:3 enthalten. Die Komponenten A und B werden hierfür jeweils im entsprechenden Gewichtsverhältnis eingewogen und jeweils mit der fünfachen Menge an Wasser und mit Nafion-Lösung versetzt. Die Menge an Nafion-Lösung wird dabei wiederum jeweils so gewählt, dass der spätere Nafion-Anteil am Feststoff 40 Gew.-% beträgt. Den Tinten wird ca. 10 Minuten vor der Verarbeitung Diammoniumcarbonat zugesetzt, so dass dessen Anteil am Feststoff 10 Gew.-% beträgt.
   Schritt b) An den Rand eines geeigneten Substrats z.B. eines Kohlenstofffilzes vom Typ Sigracet 35AC wird ein Streifen von jeder Tinte über ein fünftel der Randlänge aufgetragen in der Reihen folge Verhältnis A:B = 3:1, 2:1, 1:1, 1:2, 1:3. Anschließend wird die Tinte mittels eines Rakels von der Aufbringungskante weg über das Substrat gleichmäßig verteilt. Die so erhaltene erste Elektrodenschicht wird im Ofen bei 130 °C an Luft getrocknet, so dass sich wie im Beispiel 2) beschrieben eine poröse, fest haftende Struktur bildet.
   Schritt c) Schritt b wird so oft wiederholt, bis die gewünschte Metallbeladung erreicht ist. Dabei werden immer Streifen mit derselben Katalysatorzusammensetzung übereinander angeordnet.
   Schritt d) Die Elektrode wird durch Heißpressen mit einer Nafionmembran und einer Kathodenelektrode zu einer MEA verbunden.
   Schritt e) Die fertige MEA wird in eine DEFC oder einen DEFC Stapel eingebaut, wobei der Streifen mit der höchsten Konzentration an Komponente A zum Brennstoffeinlass der Streifen mit der höchsten Konzentration an Komponente B zum Brennstoffauslass hin orientiert wird (s. Abbildung 4)

## Patentansprüche

1. Elektrode umfassend mindestens zwei nicht miteinander legierte katalytisch aktive Komponenten (A) und (B) an und/oder in der Elektrode, worin
(a) mindestens eine erste katalytisch aktive Legierung als Komponente (A) Ethanol und/oder zumindest einen C3 bis C10-haltigen Alkohol oxidiert und
(b) mindestens eine zweite katalytisch aktive Legierung als Komponente (B) Acetaldehyd (CH₃CHO) und/oder zumindest einen C3 bis C 10-haltigen Aldehyd und/oder Essigsäue und/oder zumindest eine C2 bis C9-haltige Karbonsäure oxidiert,
wobei die Komponenten (A) und (B) unterschiedlich sind und
• die Komponente (A) neben dem Element der Gruppe 10 des Periodensystems ein Element der Gruppe 14 des Periodensystem umfasst und worin das Element der Gruppe 10 des Periodensystems Platin (Pt) und das Element der Gruppe 14 des Periodensystem Zinn (Sn) ist,
• die Komponente (B) neben dem Element der Gruppe 10 des Periodensystems ein Element der Gruppe 8 des Periodensystem umfasst und worin das Element der Gruppe 10 des Periodensystems Platin (Pt) und das Element der Gruppe 8 des Periodensystem Ruthenium (Ru) ist.

2. Elektrode nach Anspruch 1, worin die Komponente (A) und/oder die Komponente (B) geträgert, vorzugsweise auf einen Kohlenstoffträger, ist/sind.

3. Elektrode nach Anspruch 1 oder 2, worin
(a) die Komponente (A) Ethanol und/oder zumindest ein C3 bis C10-haltigen Alkohol zu Acetaldehyd (CH₃CHO) und/oder zu zumindest einen C3 bis C10-haltigen Aldehyd oxidiert
und/oder
(b) worin die Komponente (B) Acetaldehyd (CH₃CHO) und/oder zumindest ein C3 bis C10-haltigen Aldehyde zu CO₂ oxidiert.

4. Elektrode nach irgendeinem der vorhergehenden Ansprüche, worin das Gewichtsverhältnis an Metallanteil zwischen Komponente (A) und Komponente (B) 3:1 bis 1:3 beträgt.

5. Elektrode nach irgendeinem der vorhergehenden Ansprüche, worin die Elektrode
(a) ein Ionomer umfasst, vorzugsweise 30 bis 50 Gewichtsprozent an Ionomer enthält, und/oder
(b) einen Porenbildner umfasst.

6. Verwendung der Elektrode nach irgendeinem der vorhergehenden Ansprüche 1 bis 5 als Annode, vorzugsweise als Annode in einer Membran-Elektroden-Einheit (MEA).

7. Verwendung nach Anspruch 6 worin die Elektrode in einer Brennstoffzelle eingesetzt wird.

8. Membran-Elektroden-Einheit, worin die Einheit eine Annode, eine Protonenaustauschmembran und eine Kathode umfasst, wobei die Annode eine Elektrode nach irgendeinem der Ansprüche 1 bis 5 ist und vorzugsweise die Protonenaustauschmembran ein Ionomer umfasst.

9. Brennstoffzelle, vorzugsweise Direkt-Ethanol-Brennstoffzelle, umfassend eine Elektrode nach irgendeinem der Ansprüche 1 bis 5 oder eine Membran-Elektroden-Einheit nach Anspruch 9.

10. Herstellung einer Elektrode nach irgendeinem der vorhergehenden Ansprüche 1 bis 5, worin die erste katalytisch aktive Legierung (A) und die zweite katalytisch aktive Legierung (B) vermischt werden.

11. Herstellung nach Anspruch 10, worin
(a) die erste katalytisch aktive Legierung (A) und die zweite katalytisch aktive Legierung (B) vermischt werden,
(b) die Mischung mit Wasser und Ionomerdispersion versetzt und vermengt wird, und
(c) auf ein Substrat gesprüht wird.

12. Herstellung nach Anspruch 10, worin
(a) die erste katalytisch aktive Legierung (A) und die zweite katalytisch aktive Legierung (B) in mehreren Mischungen mit unterschiedlichen Verhältnis gemischt werden
(b) die einzelnen Mischungen jeweils mit Wasser und Ionomerdispersion versetz und vermengt werden
(c) die einzelnen Mischungen streifenförmig auf ein Substrat gerakelt werden, so dass die Abfolge der Streifen einen linearen Gradienten im Verhältnis der Komponente A zur Komponente B bildet.

13. Herstellung nach irgendeinem der Ansprüche 10 bis 12, worin die erste katalytisch aktive Legierung (A) und die zweite katalytisch aktive Legierung (B) in Schichten angeordnet werden.

14. Herstellung einer Membran-Elektroden-Einheit, worin die Annode nach irgendeinem der Ansprüche 10 bis 13 hergestellt ist und die Anode durch Heißpressen auf die Protonenaustauschmembran aufgebracht wird.

## Claims

1. Electrode comprising at least two catalytically active components (A) and (B) not alloyed with each other at and/or in the electrode, wherein
(a) at least one first catalytically active alloy as component (A) oxidises ethanol and/or at least one C3 to C10 containing alcohol and
(b) at least one second catalytically active alloy as component (B) oxidises acetaldehyde (CH₃CHO) and/or at least one C3 to C10 containing aldehyde and/or acetic acid and/or at least one C2 to C9 containing carbon acid,
wherein the components (A) and (B) are different and
• the component (A) comprises, besides the element of group 10 of the Periodic Table an element of group 14 of the Periodic Table and wherein the element of group 10 of the Periodic Table is platinum (Pt) and the element of group 14 of the Periodic Table is tin (Sn),
• the component (B) comprises, besides the element of group 10 of the Periodic Table an element of group 8 of the Periodic Table and wherein the element of group 10 of the Periodic Table is platinum (Pt) and the element of group 8 of the Periodic Table is ruthenium (Ru).

2. Electrode according to claim 1, wherein the component (A) and/or the component (B) is/are supported, preferably on a carbon support.

3. Electrode according to claims 1 or 2, wherein
(a) the component (A) oxidises ethanol and/or at least one C3 to C10 containing alcohol to acetaldehyde (CH₃CHO) and/or to at least one C3 to C10 containing aldehyde
and/or
(b) wherein the component (B) oxidides acetaldehyde (CH₃CHO) and/or at least one C3 to C10 containing aldehyde to CO₂.

4. Electrode according to any one of the preceding claims, wherein the weight ratio of metal content between component (A) and component (B) is 3:1 to 1:3.

5. Electrode according to any one of the preceding claims, wherein the electrode
(a) comprises a ionomer, preferably 30 to 50 weight percent of ionomer, and/or
(b) a pore-inducer.

6. Use of the electrode according to any one of the preceding claims 1 to 5 as anode, preferably as anode in a membrane-electrodes-unit (MEA).

7. Use according to claim 6 wherein the electrode is used in a fuel cell.

8. Membrane-electrodes-unit, wherein the unit comprises an anode, a proton exchanger membrane and a cathode, wherein the anode is an electrode according to any one of the preceding claims 1 to 5 and the proton exchange membrane preferably comprises an ionomer.

9. Fuel cell, preferably direct-ethanol fuel cell comprising an electrode according to any one of the preceding claims I to 5 or a membrane-electrodes-unit according to claim 6.

10. Manufacture of an electrode according to any one of the preceding claims 1 to 5, wherein the first catalytically active alloy (A) and the second catalytically active alloy (B) are mixed.

11. Manufacture according to claim 10, wherein
(a) the first catalytically active alloy (A) and the second catalytically active alloy (B) are mixed,
(b) the mixture is compounded and blended with water and ionomer dispersion, and
(c) sprayed on a substrate.

12. Manufacture according to claim 10, wherein
(a) the first catalytically active alloy (A) and the second catalytically active alloy (B) is mixed in a plurality of mixtures with different ratios
(b) the individual mixtures are each compounded and blended with water and ionomer dispersion
(c) the individual mixtures are raked into strips onto a substrate, so that the sequence of strips form a linear gradient in the ratio of component (A) to component (B).

13. Manufacture according to any one of the claims 10 to 12, wherein the first catalytically active alloy (A) and the second catalytically active alloy (B) are arranged in layers.

14. Manufacture of a membrane-electrodes-unit, wherein the anode is prepared according to any one of the claims 10 to 13 and the anode is applied onto the proton-exchange membrane by hot pressing.

## Revendications

1. Électrode comprenant au moins deux composants (A) et (B) catalytiquement actifs non alliés entre eux contre et/ou dans l'électrode, dans laquelle
(a) au moins un premier alliage catalytiquement actif oxyde, en tant que composant (A), de l'éthanol et/ou au moins un alcool en C3 à C10 et
(b) au moins un deuxième alliage catalytiquement actif oxyde, en tant que composant (B), de l'acétaldéhyde (CH₃CHO) et/ou au moins un aldéhyde en C3 à C10 et/ou de l'acide acétique et/ou au moins un acide carbonique en C2 à C9,
les composants (A) et (B) étant différents et
• le composant (A) comprenant, en plus de l'élément du groupe 10 du système périodique, un élément du groupe 14 du système périodique et dans lequel l'élément du groupe 10 du système périodique est du platine (Pt) et l'élément du groupe 14 du système périodique est de l'étain (Sn),
• le composant (B) comprend, en plus de l'élément du groupe 10 du système périodique, un élément du groupe 8 du système périodique et dans lequel l'élément du groupe 10 du système périodique est du platine (Pt) et l'élément du groupe 8 du système périodique est du ruthénium (Ru).

2. Électrode selon la revendication 1, dans laquelle le composant (A) et/ou le composant (B) est/sont supporté/s, de préférence sur un support de carbone.

3. Électrode selon la revendication 1 ou 2, dans laquelle
(a) le composant (A) oxyde de l'éthanol et/ou au moins un alcool en C3 à C10 en acétaldéhyde (CH₃CHO) et/ou en au moins un aldéhyde en C3 à C10
et/ou
(b) le composant (B) oxyde de l'acétaldéhyde (CH₃CHO) et/ou au moins un aldéhyde en C3 à C10 en CO₂.

4. Électrode selon l'une quelconque des revendications précédentes, dans laquelle le rapport de poids en part de métal entre le composant (A) et le composant (B) est de 3:1 à 1:3.

5. Électrode selon l'une quelconque des précédentes revendications, dans laquelle l'électrode
(a) comprend un ionomère, de préférence 30 à 50 pour cent en poids d'ionomère, et/ou
(b) comprend un formateur de pores.

6. Utilisation de l'électrode selon l'une quelconque des précédentes revendications 1 à 5 comme anode, de préférence comme anode dans une unité d'électrode à membrane (MEA).

7. Utilisation selon la revendication 6, dans laquelle l'électrode est mise en oeuvre dans une pile à combustible.

8. Unité d'électrode à membrane, dans laquelle l'unité comprend une anode, une membrane d'échange de protons et une cathode, l'anode étant une électrode selon l'une quelconque des revendications 1 à 5 et la membrane d'échange de protons comprenant de préférence un ionomère.

9. Pile à combustible, de préférence pile à combustible à éthanol direct, comprenant une électrode selon l'une quelconque des revendications 1 à 5 ou une unité d'électrode à membrane selon la revendication 9.

10. Fabrication d'une électrode selon l'une quelconque des revendications précédentes 1 à 5, dans laquelle le premier alliage catalytiquement actif (A) et le deuxième alliage catalytiquement actif (B) sont mélangés.

11. Fabrication selon la revendication 10, dans laquelle
(a) le premier alliage catalytiquement actif (A) et le deuxième alliage catalytiquement actif (B) sont mélangés,
(b) le mélange est coupé et mélangé avec de l'eau et une dispersion d'ionomère, et
(c) est pulvérisé sur un substrat.

12. Fabrication selon la revendication 10, dans laquelle
(a) le premier alliage catalytiquement actif (A) et le deuxième alliage catalytiquement actif (B) sont mélangés en plusieurs mélanges de rapport différent,
(b) les divers mélanges sont coupés et mélangés chacun avec de l'eau et une dispersion d'ionomère,
(c) les divers mélanges sont raclés en bandes sur un substrat de sorte que la séquence des bandes forme un gradient linéaire dans le rapport du composant A au composant B.

13. Fabrication selon l'une quelconque des revendications 10 à 12, dans laquelle le premier alliage catalytiquement actif (A) et le deuxième alliage catalytiquement actif (B) sont disposés en couches.

14. Fabrication d'une unité d'électrode à membrane, dans laquelle l'anode est fabriquée selon l'une quelconque des revendications 10 à 13 et l'anode est apposée par pression à chaud sur la membrane d'échange de protons.
